# EUROPEAN PATENT SPECIFICATION

(11) **EP 1 608 774 B1**
(45) Date of publication and mention of the grant of the patent: **29.09.2010**
(21) Application number: 03816526.2
(22) Date of filing: 31.03.2003
(51) Int. Cl.: C12Q 1/68, C12N 15/88

(54) **STN GENE OLIGONUCLEOTIDE PRIMERS FOR DETECTING SALMONELLA SPECIES AND DETECTION PROCESS USING THE SAME**
OLIGONUKLEOTIDPRIMER FÜR DAS STN GEN ZUR DETEKTION VON SALMONELLA ARTEN UND ENTSPRECHENDE NACHWEISMETHODEN
AMORCES OLIGONUCLEOTIDES SPECIFIQUES DU GENE STN PERMETTANT DE DETECTER DES ESPECES DE SALMONELLE ET PROCESSUS DE DETECTION UTILISANT CES AMORCES

(43) Date of publication of application: 28.12.2005
(73) Proprietor: Council of Scientific and Industrial Research, New Delhi 110 001 (IN)
(72) Inventor: QAZI, Ghulam, Nabi, Jammu 180 001 (IN); VERMA, Vijeshwar, Jammu 180 001 (IN); RIYAZ-UL-HASSAN, Syed, Jammu 180 001 (IN)
(74) Representative: Icely, Dominic Michael
(86) International application number: PCT/IN2003/000124
(87) International publication number: WO 2004/087958

(56) References cited:
- EP-A- 0 739 987
- US-B1- 6 280 978
- MURUGKAR H V ET AL: "Distribution of virulence genes in Salmonella serovars isolated from man & animals." THE INDIAN JOURNAL OF MEDICAL RESEARCH. INDIA FEB 2003, vol. 117, February 2003 (2003-02), pages 66-70, XP009018911 ISSN: 0971-5916
- CHOPRA ASHOK K ET AL: "Molecular characterization of an enterotoxin from Salmonella typhimurium" MICROBIAL PATHOGENESIS, vol. 16, no. 2, 1994, pages 85-98, XP002257709 ISSN: 0882-4010
- MAKINO SOU-ICHI ET AL: "Establishment of the PCR system specific to Salmonella spp. and its application for the inspection of food and fecal samples" JOURNAL OF VETERINARY MEDICAL SCIENCE, vol. 61, no. 11, November 1999 (1999-11), pages 1245-1247, XP009019082 ISSN: 0916-7250
- KONG R Y C ET AL: "CO-DETECTION OF THREE SPECIES OF WATER-BORNE BACTERIA BY MULTIPLEX PCR" MARINE POLLUTION BULLETIN, OXFORD, GB, vol. 31, no. 4/12, 1 April 1995 (1995-04-01), pages 317-324, XP002064700 ISSN: 0025-326X
- CHOPRA A K ET AL: "CLONING AND SEQUENCE ANALYSIS OF HYDROGENASE REGULATORY GENES HYDHG FROM SALMONELLA-TYPHIMURIUM" BIOCHIMICA ET BIOPHYSICA ACTA, vol. 1129, no. 1, 1991, pages 115-118, XP009026214 ISSN: 0006-3002
- MCCLELLAND MICHAEL ET AL: "Complete genome sequence of Salmonella enterica serovar Typhimurium LT2" NATURE, MACMILLAN JOURNALS LTD. LONDON, GB, vol. 413, no. 6858, 25 October 2001 (2001-10-25), pages 852-856, XP002224529 ISSN: 0028-0836

## Description

### Field of the present invention

The present invention relates to oligonucleotide primers of SEQ ID Nos. 1 to 2 specific for *Salmonella* enterotoxin gene (*stn*) gene, useful for rapid and specific screening of *Salmonella;* and also a process for the rapid and specific detection of *Salmonella* enterotoxin gene (*stn*) gene in a subject for the presence of parasite *Salmonella* using oligonucleotide primers of SEQ ID Nos. 1 to 2 for Polymerase Chain Reaction (PCR), said process comprising steps of preparing a DNA template of the gene, amplifying the template using the primers by PCR, running the PCR products on a gel, and detecting the parasite.

### Background of the invention

*Salmonella* species are facultative, intracellular parasites that invade the mucous membrane of the epithelial cells and are transmitted to humans mainly through water, meat, eggs and poultry products. *Salmonella* infection is the most frequent food-borne gastrointestinal disease transmitted from animals to humans. Typhoid fever still remains endemic in many developing countries and non-typhoidal salmonellosis also is a major food-borne disease worldwide and is estimated to be responsible for the deaths of more than 500 people each year, with costs of $1 billion to $1.5 billion annually in the United States alone (Threlfall 1996; Mead *et al.* 1999). These figures in India are not fully documented but are expected to be much higher. To prevent *Salmonella* infection, good monitoring and screening programs are required. Detection of *Salmonella* by conventional bacteriological methods are time consuming and usually require 5 to days. Therefore, efforts have been made by many workers to reduce the time required and to increase the sensitivity of the methods to detect *Salmonella* (Notermans *et al.,* 1997; Ferretti *et al.,* 2001; Carli *et al.,* 2001).

Increased public awareness of the health related and economic impact of food-borne contamination and illness has resulted in greater efforts to develop more sensitive methods of pathogenic detection and identification. Advances in molecular biology technology, particularly the polymerase chain reaction (PCR), have allowed more reliable microbial identification and surveillance. PCR has also become a valuable tool for investigating food-borne outbreaks and identification of etiological agents responsible for the microbial epidemics. PCR techniques have provided increased sensitivity, allowed more rapid processing times and enhanced the detection of bacterial pathogens. In addition to analysis of foods, PCR has also been successfully applied for the detection and identification of pathogenic microorganisms in clinical and environmental samples (Simon 1999; White 1992). Enterotoxigenicity has been recognized as one of the distinct pathological attributes of diarrhoea-inducing bacteria. *Salmonella* serotypes, which are known for their association with gastroenteritis and diarrhoea in humans and animals, have also been shown to produce enterotoxin. The *stn* gene is located at approximately 89 minutes on the *Salmonella lyphimurium* chromosome and the presence of an intact *stn* gene contributes significantly to the overall virulence *of Salmonella.* The *stn* gene is present in all *Salmonella* species (Chopra et al., 1994, Microbial Pathogenesis, 16(2), p. 85-98) and it is relatively distinct in terms of sequence identity (Murugkar et al., Feb 2003, Indian J. Med. Res., 117 p. 66-70). Oligonucleotide primers specific for the *stn* gene have been previously exploited in PCR-based detection methods for *Salmonella* in a range of sample types (EP-A-0739987 and Makino et al., 1999, J. Vet Med Sci., 61(11), p. 1245-1247). We present here the use of *stn* gene as a detection marker for *Salmonella.*

### Objects of the present invention

The main object of the present invention is to develop primers for the detection of parasite *Salmonella.*

Another main object of the present invention is to develop a rapid and efficient process for the detection of parasite *Salmonella.*

Yet another main object of the present invention is to develop a process for the detection of parasite *Salmonella* from food, biological samples, etc.

### Summary of the invention

The present invention provides oligonucleotide primers of SEQ ID Nos. 1 to 2 specific for *Salmonella* enterotoxin gene *(stn)* gene. These are useful for rapid and specific screening of *Salmonella.* Also provided is a process for the detection of *Salmonella* enterotoxin gene *(stn)* gene in a sample from a subject for the presence of said parasite using oligonucleotide primers of SEQ ID Nos. 1 to 2 for Polymerase Chain Reaction (PCR), said process comprising steps of preparing a DNA template of the gene from said sample, amplifying the template by PCR using the primers, running the PCR products on a gel, and detecting thePCR product, wherein the presence of the PCR product indicates the presence of *Salmonella* in the subject. Also provided is a water quality control comprising said detection.

### Detailed description of the present invention

Oligonucleotide primers of SEQ ID Nos. 1 to 21 specific for *Salmonella* enterotoxin gene (*stn*) gene are useful for rapid and specific screening of *Salmonella.* A process for the rapid and specific detection of *Salmonella* enterotoxin gene *(stn)* gene in a subject for the presence of parasite *Salmonella* uses oligonucleotide primers of SEQ ID Nos. 1 to 21 for Polymerase Chain Reaction (PCR), said process comprising steps of preparing a DNA template of the gene, amplifying the template using the primers by PCR, running the PCR products on a gel, and detecting the parasite.

In an embodiment of the present invention, the gene is sequenced from serotypes of *Salmonella.*

In another embodiment of the present invention, the primers can detect upto about 1 cell per ml of water with or without any enrichment.

The primers can detect up to 10 cells per ml of blood with or without any enrichment.

In still another embodiment of the present invention, the primers can detect upto 1 cell per gram of food and clinical sample with or without any enrichment.

DNA from blood and background micro flora does not interfere with the PCR assay.

In still another embodiment of the present invention, the process can be used as quality control of water and diagnosis of bacterium *Salmonella.*

In still another embodiment of the present invention, the subject is humans and animals.

In still another embodiment of the present invention, the set of primers of SEQ ID Nos. 1 and 2 generates amplicons of 200bp.

The set of primers of SEQ ID Nos. 3 and 4 generates amplicons of 207bp.

The set of primers of SEQ ID Nos. 5 and 6 generates amplicons of 1318bp.

The set of primers of SEQ ID Nos. 7 and 8 generates amplicons of 450bp.

In still another embodiment of the present invention, the concentration of primers ranges from between 1 pM to 100 pM.

In still another embodiment of the present invention, visualizing the PCR products on gel of concentration ranges from 0.3% to 2.7%.

In still another embodiment of the present invention, the PCR involves initial denaturation at 93°C to 97°C for 30 sec. to 7 min. and 23 to 50 cycles of 93°C to 97°C for 3 sec. to 2 min., 50°C to 67°C for 10 sec to 2 min., 70°C to 75°C for 10 sec. to 2 min. and final extension at 70°C to 75°C for 2 min. to 10 min.

In still another embodiment of the present invention, the DNA is isolated from pure cultures, water, food and clinical samples.

### Brief description of the accompanying drawings

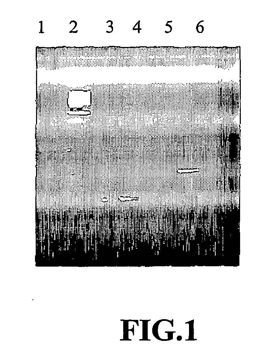

**Fig 1** shows 1% agarose gel showing all four PCR products used in the detection of *Salmonella.* Lane 1: 1 kb DNA ladder (Fermentas). Lane 2: PCR amplification with primers QVR133 and QVR134 (200 bp); Lane 3: PCR amplification with primers QVR135 and QVR136 (207 bp); Lane 4: PCR amplification with primers QVR137 and QVR138 (1318 bp); Lane 5: PCR amplification with primers QVR139 and QVR140 (450 bp); Lane 6: Negative control with primers QVR139 and QVR140

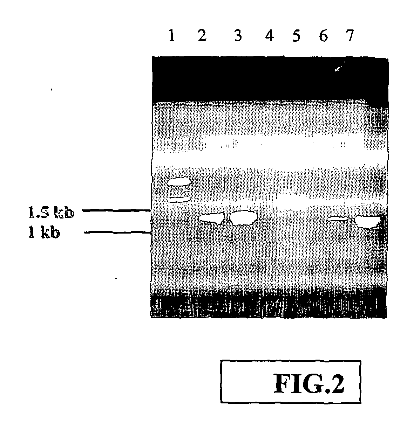

**Fig 2** shows 1% agarose gel showing the detection of different numbers of *Salmonella* cells from blood with primers QYR 137 and QVR 138. Lane 1: 1 kb DNA ladder (Fermentas) Lane 2: Positive control; Lane 3: Blood sample spiked with approx. 1 cell and given pre-enrichment for 5 hours; Lane 4: Negative control (unseeded blood sample); Lane 5: Blood sample spiked with less than 10 cells and PCR run without pre-enrichment; Lane 6: Blood sample spiked with 10 cells and PCR run without pre-enrichment and Lane 7: Blood sample spiked with 10³ cells and PCR run without pre-enrichment

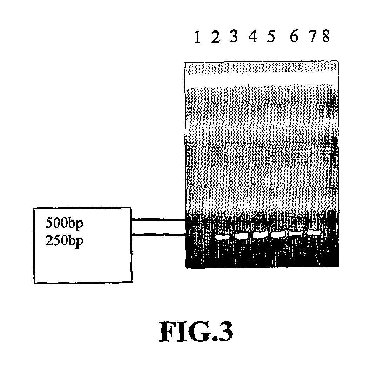

**Fig 3** shows 1% agarose gel showing PCR amplified product of the nested PCR for the detection of *Salmonella.* The first PCR reactions were run with primers QVR137 and QVR138 and those in the nested PCR were run with primers QVR139 and QVR 140. Lane 1: 1 kb DNA ladder (Fermentas) Lanes 2-7: Different serotypes of *Salmonella* and Lane 8: negative control.

The *Stn* gene was sequenced from several serotypes of *Salmonella* and the sequence was found to be conserved. A PCR based protocol for the detection of *Salmonella* has been developed by using specific primers based on *Salmonella* enterotoxin gene *(stn).* These primers and the PCR protocols have been deigned by us and are being reported for the first time. The method is highly specific and can detect upto 1 cell per ml of water and less than 10 cells per ml of blood without any pre-enrichment. The primers do not show any tendency to amplify non-*Salmonella* DNA. DNA from blood and background micro flora do not interfere with the PCR assay either by generating any non-specific PCR amplicons or by inhibiting the PCR assay. This method may be used as quality control of water and diagnosis of bacteremia by *Salmonella* in humans and animals.

Oligonucleotide primers designed on the basis of *stn* gene *(Salmonella* enterotoxin gene) and used in Polymerase Chain Reaction are useful for the rapid and specific detection of *Salmonella* by the PCR protocol consisting of initial denaturation at 93°C to 97°C for 30 sec. to 7 min. and 23 to 50 cycles of 93°C to 97°C for 3 sec. to 2 min., 50°C to 67°C for 10 sec to 2 min., 70°C to 75°C for 10 sec. to 2 min. and final extension at 70°C to 75°C for 2 min. to 10 min after DNA isolation by any known method suitable for PCR from pure cultures, water, food and clinical samples, using 1fg to 10 µg of DNA and any thermostable DNA polymerase enzyme followed by visualizing the PCR products on agarose gel ranging from 0.5% to 2.5%.

In a rapid method for the detection of *Salmonella,* the primers selected are:
The following is Set 1 of primers of SEQ ID nos. 1 and 2 respectively, also referred to as QVR133 and QVR 134.
   5'GAAGCAGCGCCTGTAAAATC 3' / 5'TGGCTGTGGTGCAAAATATC 3';
The following is Set 2 of primers of SEQ ID nos. 3 and 4 respectively, also referred to as QVR135 and QVR 136.
   5'GCCACCAGCTTTTCTTTACG 3' / 5'ACGAACCAGCGAAACAAAOT 3';
The following is Set 3 of primers of SEQ ID nos. 5 and 6 respectively, also referred to as QVR137 and QVR 138.
   5'GGTCAAAATCCAGCGGTTTA 3' / 5' TTGCTGCTAACGGCGAGA 3',
The following is Set 4 of primers of SEQ ID nos. 7 and 8 respectively, also referred to as QVR139 and QVR 140.
   5'GCCGGCTTTCAACGCCTCTAC 3' / 5'GACCAAAGCTGACGGGACAG 3'
   SEQ ID NO. 9
   5' ACGCCTCTACCGCCGTTTCC 3',
   SEQ ID NO. 10
   5'CGACCAAAGCTGACGGGACAG 3',
   SEQ ID NO. 11
   5'CGTTTCCACGCTGGAAAATGC 3',
   SEQ ID NO. 12
   5'GCCGGCTTTCAACGCCTCTAC 3',
   SEQ ID NO. 13
   5'CATGGCGGCGCGATTAAGG 3',
   SEQ ID NO. 14
   5'AATCGGAATGGCGGGATTGAG 3',
   SEQ ID NO. 15
   5 'TGCCGTTCATAATCAAAATCG 3',
   SEQ ID NO. 16
   5'GATTTTACAGGCGCTGCTTC 3',
   SEQ ID NO. 17
   5'GGTCAAAATCCAGCGGTTTA 3',
   SEQ ID NO. 18
   5'GCTCAGGTGCGTGAGAAAGT 3',
   SEQ CD NO. 19
   5 'GTTCGAGCAATTCGCTTACC 3',
   SEQ ID NO. 20
   5`GCTTGATGCAATGAAGCGTA 3',
   SEQ ID NO. 21
   5'TTCCCGCTATCGGTAACAGT 3',

The concentration of primers used could range from 1 pM to 100 pM, set 1, set 2, set 3 and set 4 generating specific amplicons of 200 bp, 207 bp, 1318 bp and 450 bp respectively (fig 1).

All types of serotypes (Fig 3) of *Salmonella* could be detected from varied sources such as food, clinical (Fig 2) and water samples with or without enrichment as less as 1 cell per ml or per g. All types of serotypes of *Salmonella* could be detected from varied sources containing 1 cell per 25 ml or 25 g of sample with or without enrichment.

Chromosomal DNA isolated by any known method including preparation of heat shock lysate could be used in the PCR followed by visualizing the PCR products on agarose gel ranging from 0.5% to 2.5%.

### Methodology

Protocol consists of three main steps:.
- Preparation of template DNA
- Polymerase Chain reaction
- Visualization of the product on agarose gel

**DNA isolation for PCR:** The cell pellet from 1 ml of the liquid culture or a single colony on the agar medium was suspended in 100 µl of sterilized Millipore water and incubated in a dry bath at 100°C for 5 min. The mixture was immediately transferred to ice bath and left for 3 min. The resultant cell lysate was centrifuged at 7000 rpm for 3 min. and 2 µl of the supernatant was directly used in a 20 µl PCR reaction.

Wherever felt necessary, the assay was performed by using isolated chromosomal DNA. For isolation of pure chromosomal DNA, the cultures were grown for 6 hrs in nutrient broth and DNA was isolated by GES method (Pitcher *et al.,* 1989). 10 ng of DNA was normally used in a 20 µl reaction assay.

**Template preparation from blood:** DNA isolation kit (M/S Bio Basic, Canada) was used for the isolation of DNA from blood (fig 2).

**Template preparation from water:** For isolation of DNA from water-borne bacteria, 1 ml of the sample was centrifuged at 7000 r.p.m for 3 min. in a 5 ml eppendorf tube, supernatant discarded and 10µl of autoclaved Millipore water added to each tube. The resultant suspension was vortexed, incubated in a dry bath at 100°C for 5 min. and the whole volume used in a 20 µl PCR reaction.

**Enrichment:** In case of blood 250 µl aliquots of the samples were inoculated into 5 ml liquid medium and for water 1 ml aliquots inoculated into 1 ml of double strength Brain Heart Infusion Broth (HiMedia, India) and incubated at 37°C for 5h. The cell lysates were prepared as above.

## Claims

1. A set of oligonucleotide primers specific for *Salmonella* enterotoxin (*stn*) gene, the primers being SEQ ID NO. 1 and SEQ ID NO. 2.

2. A process for the detection of a *Salmonella* enterotoxin gene (*stn*) gene in a sample from a subject for the presence of said parasite, using the oligonucleotide primer set according to claim 1, said process comprising steps of:
i. preparing a DNA template of the gene from said subject,
ii. amplifying the template by PCR, using said primers,
iii. running the PCR products on a gel, and
iv. detecting the PCR product, wherein the presence of the PCR product indicate the presence of Salmonella in the subject.

3. A process according to claim 2, wherein the gene is sequenced from serotypes of *Salmonella.*

4. A process as claimed in claim 2, wherein the primers detect up to about 1 cell per ml of water, food and clinical samples from the subject.

5. A process according to claim 2, wherein the subject is humans and animals.

6. A process according to claim 2, wherein the set of primers of SEQ ID Nos. 1 and 2 generates amplicons of 200bp.

7. A process according to claim 2, wherein the concentration of primers ranges from between 1 pM to 100 pM.

8. A process according to claim 2, wherein visualizing the PCR products on gel of concentration ranges from 0.3% to 2.7%.

9. A process according to claim 2, wherein PCR involves initial denaturation at 93°C to 97 °C for 30 sec. to 7 min. and 23 to 50 cycles of 93°C to 97°C for 3 sec. to 2 min., 50°C to 67 °C for 10 sec to 2 min., 70 °C to 75 °C for 10 sec. to 2 min. and final extension at 70 °C to 75 °C for 2 min. to 10 min.

10. A process according to claim 2, wherein the DNA is isolated from pure cultures, water, food and clinical samples.

11. A method of water quality control, comprising detecting the presence of Salmonella according to claim 2.

## Patentansprüche

1. Satz von Oligonucleotid-Primern, die für das Salmonella-Enterotoxin-Gen (stn-Gen) spezifisch sind, wobei die Primer SEQ ID-Nr.: 1 und SEQ ID-Nr.: 2 sind.

2. Verfahren zum Nachweis eines Salmonella-Enterotoxin-Gens (stn-Gens) in einer Probe von einem Patienten, um die Anwesenheit des Parasiten unter Verwendung des Oligonucleotid-Primers nach Anspruch 1 nachzuweisen, wobei das Verfahren die folgenden Schritte aufweist:
i. Herstellen einer DNA-Matrize des Gens von dem Patienten,
ii. Amplifizieren der Matrize durch PCR unter Verwendung der Primer,
iii. Durchlaufenlassen der PCR-Produkte auf einem Gel und
iv. Nachweis des PCR-Produkts, wobei die Anwesenheit des PCR-Produkts die Anwesenheit von Salmonella in dem Patienten anzeigt.

3. Verfahren nach Anspruch 2, wobei das Gen aus Serotypen von Salmonella sequenziert wird.

4. Verfahren nach Anspruch 2, wobei die Primer bis zu etwa 1 Zelle pro ml Wasser, Lebensmittel und klinischer Proben von dem Patienten nachweisen.

5. Verfahren nach Anspruch 2, wobei die Patienten Menschen und Tiere sind.

6. Verfahren nach Anspruch 2, wobei der Primersatz mit den SEQ ID-Nrn. 1 und 2 Amplicons von 200 bp erzeugt.

7. Verfahren nach Anspruch 2, wobei die Primer-Konzentration im Bereich von 1 pM bis 100 pM liegt.

8. Verfahren nach Anspruch 2, wobei die Visualisierung der PCR-Produkte auf Gel im Konzentrationsbereich von 0,3% bis 2,7% erfolgt.

9. Verfahren nach Anspruch 2, wobei die PCR eine anfängliche Denaturierung bei 93°C bis 97°C über 30 s bis 7 min und 23 bis 50 Zyklen von 93°C bis 97°C über 3 s bis 2 min, 50°C bis 67°C über 10 s bis 2 min, 70°C bis 75°C über 10 s bis 2 min und abschließende Extension bei 70°C bis 75°C über 2 min bis 10 min beinhaltet.

10. Verfahren nach Anspruch 2, wobei die DNA aus Reinkulturen, Wasser, Lebensmittel und klinischen Proben isoliert wird.

11. Verfahren zur Wasserqualitätskontrolle, das den Nachweis der Anwesenheit von Salmonella nach Anspruch 2 aufweist.

## Revendications

1. Groupe d'amorces oligonucléotides spécifiques pour un gène d'entérotoxine de Salmonelle (stn), les amorces étant la SEQ ID NO. 1 et la SEQ ID NO. 2.

2. Procédé pour la détection d'un gène d'entérotoxine de Salmonelle (stn) dans un échantillon provenant d'un sujet sur la présence dudit parasite, en utilisant le groupe d'amorces oligonucléotides selon la revendication 1, ledit procédé comprenant les étapes de:
i. préparation d'une matrice d'ADN du gène provenant dudit sujet,
ii. amplification de la matrice par PCR, en utilisant lesdites amorces,
iii. mise des produits PCR sur un gel, et
iv. détection du produit PCR, où la présence du produit PCR indique la présence de Salmonelle dans le sujet.

3. Procédé selon la revendication 2, dans lequel le gène est séquencé à partir de sérotypes de Salmonelle.

4. Procédé selon la revendication 2, dans lequel les amorces détectent jusqu'à environ 1 cellule par ml d'eau, de nourriture et d'échantillons cliniques provenant du sujet.

5. Procédé selon la revendication 2, dans lequel le sujet est des humains et des animaux.

6. Procédé selon la revendication 2, dans lequel le groupe d'amorces des SEQ ID Nos. 1 et 2 génère des amplicons de 200 bp.

7. Procédé selon la revendication 2, dans lequel la concentration d'amorces varie entre 1 pM et 100 pM.

8. Procédé selon la revendication 2, dans lequel la visualisation des produits PCR sur un gel de concentration varie de 0,3% à 2,7%.

9. Procédé selon la revendication 2, dans lequel la PCR implique une dénaturation initiale à 93°C à 97°C pendant 30 sec à 7 min et 23 à 50 cycles de 93°C à 97°C pendant 3 sec à 2 min, 50°C à 67°C pendant 10 sec à 2 min, 70°C à 75°C pendant 10 sec à 2 min et une extension finale à 70°C à 75°C pendant 2 min à 10 min.

10. Procédé selon la revendication 2, dans lequel l'ADN est isolé à partir de cultures pures, d'eau, de nourriture et d'échantillons cliniques.

11. Procédé de contrôle de la qualité de l'eau, comprenant la détection de la présence de Salmonelle selon la revendication 2.
